# EUROPÄISCHE PATENTSCHRIFT

(11) **EP 3 147 072 B1**
(45) Veröffentlichungstag und Bekanntmachung des Hinweises auf die Patenterteilung: **24.04.2019**
(21) Anmeldenummer: 16187430.0
(22) Anmeldetag: 06.09.2016
(51) Int. Cl.: B23P 9/02, B21C 37/30, B24B 39/02, F16C 33/08, F16C 33/14, F16C 9/04

(54) **KALIBRIERVERFAHREN UND KALIBRIERANORDNUNG MIT EINER KALIBRIERVORRICHTUNG**
CALIBRATION METHOD AND CALIBRATION SYSTEM WITH A CALIBRATION DEVICE
PROCÉDÉ D'ÉTALONNAGE ET SYSTÈME D'ÉTALONNAGE AVEC UN DISPOSITIF D'ÉTALONNAGE

(30) Priorität: 22.09.2015 DE 102015116004
(43) Veröffentlichungstag der Anmeldung: 29.03.2017
(73) Patentinhaber: Alfing Kessler Sondermaschinen GmbH, 73433 Aalen (DE)
(72) Erfinder: Retzler, Peter, 73574 Iggingen (DE)
(74) Vertreter: Patentanwälte Bregenzer und Reule Partnerschaftsgesellschaft mbB

(56) Entgegenhaltungen:
- EP-A1- 2 923 793
- DE-A1- 19 702 445
- DE-A1-102010 025 067
- DE-A1-102011 001 492
- JP-A- 2001 263 355
- DATABASE WPI Week 199210 Thomson Scientific, London, GB; AN 1992-078729 XP002766317, -& SU 1 655 761 A (TOMSK POLY) 15. Juni 1991 (1991-06-15)

## Beschreibung

Die Erfindung betrifft ein Kalibrierverfahren zum Kalibrieren einer Lageröffnung eines Werkstücks, insbesondere eines Motorbauteils, zum Beispiel eines Pleuels, mit einer Kalibriervorrichtung, die mindestens ein Kalibrierwerkzeug aufweist, das an seinem Außenumfang mindestens eine Kalibrierkontur aufweist, mit der eine als Lagerfläche dienende Lager-Innenkontur der Lageröffnung kalibrierbar ist, wobei bei dem Kalibrierverfahren die mindestens eine Kalibrierkontur durch eine Vorschubbewegung entlang einer Kalibrierungsbahn zum Kalibrieren der Lageröffnung an der Lager-Innenkontur entlang bewegt wird.

Ein derartiges Kalibrierverfahren sowie eine Kalibriervorrichtung sind beispielsweise in DE 10 2011 001 492 A1 und EP 2 923 793 A1 erläutert. Die EP 2 923 793 A1 fällt unter Artikel 54(3) EPÜ.

Die bekannten Kalibrierwerkzeuge eignen sich dazu, beispielsweise Lagerhülsen oder Lagerbuchsen eines Pleuels zu kalibrieren, das heißt den Innenumfang der Lageröffnung exakt einzustellen und dabei gleichzeitig die Lagerbuchse nach radial außen zu drücken, so dass sie in einer Bohrung, zum Beispiel dem kleinen oder großen Auge des Pleuels, fest sitzen. Im einfachsten Fall wird z.B. eine Kugel als Kalibrierwerkzeug durch eine eingebaute Lagerbuchse oder Hülse durchgedrückt. Der Außendurchmesser des Kalibrierwerkzeugs ist größer als der Innendurchmesser der Lagerbuchse. Das oder ein Kalibrierwerkzeug werden auch mehrfach in die Lagerbuchse eingeführt. Beim Kalibrieren erfolgt eine radiale und axiale Umformung der Lagerbuchse, insbesondere an den Kontaktflächen zur Kalibrierkontur des Kalibrierkörpers, so dass das Material der Lagerbuchse verdichtet wird und sie zudem fester in der Bohrung des Werkstücks, z.B. des Pleuels, sitzt. Wenn jedoch beispielsweise eine Ölnut oder eine sonstige Vertiefung am Innenumfang der Lageröffnung vorhanden ist, wird diese durch die Kalibrierung beschädigt, beispielsweise verengt, verformt oder dergleichen. Daher ist es üblich, eine derartige Ölnut nach der Kalibrierung einzubringen. Das Verfahren ist jedoch aufwendig.

Es ist daher die Aufgabe der vorliegenden Erfindung, ein verbessertes Kalibrierverfahren sowie eine verbesserte Kalibriervorrichtung bereitzustellen.

Zur Lösung der Aufgabe ist bei einem Kalibrierverfahren der eingangs genannten Art vorgesehen:
Vorschieben der mindestens einen Kalibrierkontur an einer quer zu der Kalibrierungsbahn verlaufenden nutartigen, an einer Lager-Innenkontur der Lageröffnung angeordneten Vertiefung, insbesondere einer Ölnut, derart, dass die mindestens eine Kalibrierkontur im Verlauf der Vorschubbewegung mit unterschiedlichen Teilabschnitten der Vertiefung in Eingriff gelangt.

Ferner ist eine Kalibrieranordnung mit einer Kalibriervorrichtung gemäß der technischen Lehre des Anspruchs 6 vorgesehen, welche die Kalibriervorrichtung und das Werkstück umfasst.

Vorteilhafte Ausführungsbeispiele des Kalibrierverfahrens und der Kalibriervorrichtung sind in den abhängigen Ansprüchen angegeben.

Während der Vorschubbewegung mit unterschiedlichen Teilabschnitten der Vertiefung in Eingriff ist die mindestens eine Kalibrierkontur zweckmäßigerweise nicht stets mit dem gleichen Teilabschnitt oder der gesamten Vertiefung in Eingriff.

Die Vertiefung an der Lageröffnung verläuft also nicht parallel zur Kalibrierungsbahn oder jedenfalls nicht vollständig parallel zu Kalibrierungsbahn. Beispielsweise verläuft die Vertiefung rechtwinkelig quer zu der Kalibrierungsbahn. Es ist aber auch möglich, dass die Vertiefung insgesamt oder abschnittsweise schräg bezüglich der Kalibrierungsbahn verläuft.

An dieser Stelle sei bemerkt, dass die Vertiefung selbstverständlich auch mindestens einen parallel zu Kalibrierungsbahn verlaufenden Abschnitt aufweisen kann. Die Vertiefung kann beispielsweise entlang des gesamten Innenumfang der Lageröffnung verlaufen. Die Vertiefung kann beispielsweise schraubenförmig sein. Es ist auch eine Vertiefung möglich, die beispielsweise U-förmig oder L-förmig ist.

Der innovative Gedanke ist dabei, dass die Kalibrierkontur nicht gleichzeitig mit der gesamten Länge oder der gesamten Vertiefung in Eingriff gelangt, was beispielweise dazu führen könnte, dass eine in eine Lageröffnung des Werkstücks eingepresste Lagerhülse aus der Lageraufnahme herausgedrückt werden kann. Der eigentlich gewünschte Effekt, dass nämlich die Lagerhülse in der Lageraufnahme nach dem Kalibrieren besonders fest sitzt, ist dann gerade nicht erreicht.

Die mindestens eine Kalibrierkontur kann beispielsweise einen schraubenförmigen Verlauf haben. Mithin sind also beispielsweise mindestens zwei zueinander parallele Schrägkonturen vorgesehen. Es ist aber auch möglich, dass Schrägkonturen mit unterschiedlichen Schrägneigungswinkeln bezüglich der Kalibrierungsbahn bei der mindestens einen Kalibrierkontur oder dem Kalibrierwerkzeug vorgesehen sind.

Es ist weiterhin möglich, dass die mindestens eine Kalibrierkontur einen keilförmigen Verlauf in Richtung der Kalibrierungsbahn aufweist. Beispielsweise kann eine Keilspitze der Kalibrierkontur in Richtung der Vorschubbewegung nach vorn oder nach hinten gerichtet sein.

Weiterhin ist es möglich, dass die mindestens eine Kalibrierkontur einen in Richtung der Kalibrierungsbahn nach vorn oder hinten gerichteten, beispielsweise ausgerundeten oder muldenförmigen Vorsprung aufweist.

Die Kalibrierungsbahn verläuft zum Beispiel entlang z.B. einer linearen oder gekrümmten Vorschubachse, in der das Kalibrierwerkzeug und das Werkstück relativ zueinander bewegt werden, z.B. das Kalibrierwerkzeug bezüglich des Werkstücks oder umgekehrt oder beides. Die Kalibrierungsbahn verläuft in der Regel geradlinig, verläuft also entlang einer Kalibrierungsachse oder bildet eine Kalibrierungsachse.

Die Lageröffnung dient beispielsweise als Lageraufnahme für ein Drehlager und/oder für ein Schiebelager, z.B. einer Kurbelwelle.

Die Lageröffnung ist vorteilhaft an einer Lagerbuchse vorgesehen, die in einer Lageraufnahme eines Grundkörpers des Werkstücks, insbesondere eines Motorbauteils, aufgenommen ist. Ein bevorzugtes Anwendungsgebiet der Erfindung sind Motorbauteile, z.B. Pleuel, Motorgehäuse oder dergleichen.

Erfindungsgemäß weisen bei der Kalibrieranordnung die mindestens eine Kalibrierkontur und die Vertiefung an der Lager-Innenkontur unterschiedliche Winkel bezüglich der Kalibrierungsbahn auf. Beispielsweise ist es möglich, dass die Vertiefung an der Lagerinnenkontur orthogonal zu der Kalibrierungsbahn verläuft, während die mindestens eine Kalibrierkontur in einem schrägen Winkel zur Kalibrierungsbahn und zur Orthogonalen bezüglich der Kalibrierungsbahn verläuft. Es ist aber auch möglich, dass beispielsweise die Kalibrierkontur orthogonal bezüglich der Kalibrierungsbahn ausgerichtet ist, während die Vertiefung an der Lagerinnenkontur nicht orthogonal bezüglich der Kalibrierungsbahn verläuft, also schräg verläuft.

Ein Schrägverlauf der Kalibrierkontur oder der Vertiefung kann eine geradlinige oder eine zumindest abschnittsweise geradlinige Kontur oder auch eine gerundete, beispielweise bogenförmige oder in sonstiger Weise gekrümmte Kontur umfassen.

Erfindungsgemäß weisen bei der Kalibrieranordnung die mindestens eine Kalibrierkontur oder die Vertiefung oder beide bezüglich der Kalibrierungsbahn einen Schrägverlauf auf. Mithin sind die Kalibrierkontur und/oder die Vertiefung bezüglich der Kalibrierungsbahn nicht orthogonal.

Wenn die Vertiefung und die Kalibrierkontur beide schräg verlaufen, sind bei Vertiefung und Kalibrierkontur zweckmäßigerweise unterschiedliche Schrägverläufe bezüglich der Kalibrierungsbahn vorgesehen. Somit wird verhindert, dass sozusagen der gesamte Verlauf der Vertiefung oder die gesamte Vertiefung gleichzeitig in Eingriff mit der Kalibrierkontur gelangt. Bezüglich einer orthogonalen zur Kalibrierungsbahn können die beiden Schrägverläufe gleichsinnig sein, aber auch gegensinnig. Es ist also beispielsweise möglich, dass zwischen der Vertiefung und der mindestens einen Kalibrierkontur während der Vorschubbewegung eine Orthogonale zur Kalibrierungsbahn angeordnet ist oder verläuft.

Eine zweckmäßigerweise Möglichkeit zur verbesserten Kalibrierung von insbesondere eine schräge Seitenkontur aufweisenden Lageröffnungen, beispielsweise bei Korbhenkel-Pleueln, sieht zweckmäßigerweise vor, dass das Kalibrierwerkzeug mindestens eine bezüglich der Kalibrierungsbahn vor oder hinter der mindestens einen Kalibrierkontur angeordnete Nebenkalibrierkontur zum Abstützen des Kalibrierwerkzeugs beim Kalibrieren durch die mindestens eine Kalibrierkontur an der Lager-Innenkontur in einer bezüglich der Kalibrierungsbahn schräg verlaufenden Ebene aufweist. Die mindestens eine Nebenkalibrierkontur und die mindestens eine Kalibrierkontur sind vorzugsweise gleichzeitig in stützendem und kalibrierendem Kontakt oder Eingriff mit der Lager-Innenkontur. Dabei ist ein Grundgedanke, dass bei einer beispielsweise ringförmigen Kalibrierkontur eine zusätzliche Nebenkalibrierkontur am Kalibrierwerkzeug vorhanden ist. Durch die Abstützung des Kalibrierwerkzeugs in einer bezüglich der Kalibrierungsbahn, vorzugsweise eine Linearachse, schräg verlaufenden Ebene ist es auch möglich, beispielsweise Lagerbuchsen in sogenannten Korbhenkel-Pleueln kalibrieren, ohne dass das freie Ende des das Kalibrierwerkzeug tragenden Werkzeugträgers unbedingt abgestützt werden muss. Das Kalibrierwerkzeug ermöglicht es, dass beispielsweise eine Lagerbuchse in einer Bohrung des Werkstücks, z.B. eines Pleuels, optimal angepresst und kalibriert wird.

Beispielsweise ist die Nebenkalibrierkontur voreilend und/oder nacheilend bezüglich der Vorschubbewegung entlang der Kalibrierungsbahn.

Die mindestens eine Nebenkalibrierkontur stützt sich beispielsweise in einem Bereich der Lageröffnung an derselben ab, wo unterhalb oder oberhalb der schrägen Ebene keine stützende Fläche der Lageröffnung mehr vorhanden ist, beispielsweise weil die Lageröffnung eine schräge Stirnseiten hat oder sich zu ihren Öffnungen hin aufweitet, beispielsweise konisch. Der aufgeweitete Bereich kann z.B. nicht zu kalibrieren sein.

Zweckmäßigerweise ist vorgesehen, dass die Hauptkalibrierkontur oder die Nebenkalibrierkontur oder beide bezüglich der Kalibrierungsbahn einen Schrägverlauf aufweisen, also nicht orthogonal sind. Es ist aber auch möglich, dass beispielsweise die Hauptkalibrierkontur schräg bezüglich der Kalibrierungsbahn ist, also nicht orthogonal, während die mindestens eine Nebenkalibrierkontur orthogonal zu Kalibrierungsbahn verläuft.

Es versteht sich, dass bezüglich der Kalibrierungsbahn vor und hinter der mindestens einen Kalibrierkontur jeweils eine Nebenkalibrierkontur vorgesehen sein kann. Es ist auch möglich, dass zwischen zwei Nebenkalibrierkonturen mehrere Kalibrierkonturen, zum Beispiel Kalibrierringe, vorgesehen sind.

Die mindestens eine Kalibrierkontur steht zweckmäßigerweise weiter vor einen Außenumfang des Kalibrierwerkzeugs vor als die mindestens eine Nebenkalibrierkontur. Die mindestens eine Nebenkalibrierkontur verhält sich also sozusagen passiv bezüglich des Kalibrierens.

Es ist aber auch möglich, dass die mindestens eine Nebenkalibrierkontur oder eine der Nebenkalibrierkonturen als eine weitere Kalibrierkontur ausgestaltet ist, wobei die mindestens eine Nebenkalibrierkontur und die mindestens eine Kalibrierkontur während der Bewegung des Kalibrierwerkzeugs entlang der Kalibrierungsbahn nacheinander in kalibrierendem Eingriff mit der Lager-Innenkontur sind. Die eine Kalibrierkontur bildet also beispielsweise zunächst die Nebenkalibrierkontur oder übt die Funktion der Nebenkalibrierkontur aus, während die andere Kalibrierkontur ihre Kalibrierfunktion leistet. Diese Rollen der beiden Konturen können jedoch auch im weiteren Verlauf der Kalibrierung vertauscht werden, das heißt dass die zunächst nur stützende Kalibrierkontur die Kalibrierung fortsetzt, während die vorher noch kalibrierende Kalibrierkontur zur Nebenkalibrierkontur wird. Dies wird beim in der Zeichnung dargestellten Ausführungsbeispiel noch deutlich.

Die mindestens eine Nebenkalibrierkontur ist vorzugsweise ringförmig. Auch die mindestens eine Kalibrierkontur ist vorzugsweise ringförmig. Die Kalibrierkontur und die Nebenkalibrierkontur können beispielsweise durch einen Ringkörper gebildet sein. Es versteht sich, dass mehrere derartige Ringkörper vorhanden sein können. Mehrere individuelle Ringkörper können miteinander zu dem Kalibrierwerkzeug kombiniert sein. Es ist auch möglich, dass das mindestens Ringkörper miteinander einstückig sind.

Die Nebenkalibrierkontur und/oder die Kalibrierkontur sind beispielsweise als Kugelsegment-Außenoberflächen ausgestaltet. Mithin können also beispielsweise die vorgenannten Ringe an ihrem radialen Außenumfang kugelförmig oder kugelsegmentförmig sein.

Das Kalibrierwerkzeug weist zweckmäßigerweise mindestens zwei bezüglich der Kalibrierungsbahn hintereinander angeordnete Ringe auf. Mindestens einer dieser Ringe weist die mindestens eine Nebenkalibrierkontur auf, während mindestens ein anderer Ring die mindestens eine Kalibrierkontur aufweist. An dieser Stelle sei erwähnt, dass auch beide Ringe die oder eine Kalibrierkontur aufweisen können. Während des Kalibriervorgangs ist der eine Ring zunächst der Nebenkalibrierring und der andere Ring der Kalibrierring. Diese Rollen kehren sich dann um. Selbstverständlich ist es vorteilhaft, wenn weitere, beispielsweise ausschließlich stützende Ringe und/oder ausschließlich kalibrierende Ringe, also Nebenkalibrierringe oder Kalibrierringe, vorgesehen sind.

Zweckmäßigerweise hat die zu kalibrierende Lageröffnung bezüglich der Kalibrierungsbahn bzw. ihrer Längserstreckungsrichtung einen gleichen Durchmesser oder eine gleiche Innenkontur, ist also zylindrisch. Bevorzugt ist das Kalibrierwerkzeug an seinem Außenumfang kreisrund, d.h. zur Kalibrierung einer Lageröffnung mit einem kreisrunden Innenumfang vorgesehen. Es kann selbstverständlich auch eine andere als eine kreisrunde Außenkontur der Kalibrierkontur und/oder der Nebenkalibrierkontur vorgesehen sein, z.B. wenn ein Schiebelager zu kalibrieren ist.

Bevorzugt hat die Kalibriervorrichtung mindestens einen Werkzeugträger zum Tragen des Kalibrierwerkzeugs, wobei das Kalibrierwerkzeug zweckmäßigerweise lösbar an dem Werkzeugträger angeordnet ist. Es ist aber auch möglich, dass das Kalibrierwerkzeug fest am Werkzeugträger angeordnet ist. Das lösbare Kalibrierwerkzeug kann bei Verschleiß ausgetauscht werden. Auch eine Anpassung an andere Lagerkonturen ist ohne weiteres möglich. Der Werkzeugträger ist beispielsweise stangenartig und/oder weist einen Dorn auf.

An dem Werkzeugträger können beispielsweise zwei oder weitere Kalibrierwerkzeuge angeordnet sein. Somit kann also bezüglich der Kalibrierungsbahn die Kalibrierung durch zwei oder weitere Kalibrierwerkzeuge durchgeführt werden. Beispielsweise sind zwei erste Kalibrierwerkzeuge hintereinander an dem Werkzeugträger angeordnet, so dass sie nacheinander bei einer Linearbewegung des Werkzeugträgers in die Lageröffnung hinein oder durch diese hindurch in Eingriff mit der Lageröffnung gelangen und diese kalibrieren.

Die Kalibriervorrichtung umfasst zweckmäßigerweise eine Positioniereinrichtung zum Positionieren des mindestens einen Kalibrierwerkzeugs relativ zu dem Werkstück und/oder des Werkstücks zu dem mindestens einen Kalibrierwerkzeug. Zweckmäßigerweise ist vorgesehen, dass die Kalibrierwerkzeuge ein erstes Kalibrierwerkzeug und ein zweites Kalibrierwerkzeug umfassen, und dass sie eine Positioniereinrichtung zum Positionieren des Werkstücks und der Kalibrierwerkzeuge bezüglich der Kalibrierungsbahn relativ zueinander aufweist derart, dass das erste Kalibrierwerkzeug und das zweite Kalibrierwerkzeug von entgegengesetzten Seiten her in die Lageröffnung hinein bewegt werden.

Die Positioniereinrichtung umfasst beispielsweise eine Werkzeug-Positioniereinrichtung, die mindestens eines der Kalibrierwerkzeuge, beispielsweise das erste Kalibrierwerkzeug oder das zweite Kalibrierwerkzeug oder beide Kalibrierwerkzeuge, relativ zu dem Werkstück positioniert. Die Werkzeug-Positioniereinrichtung umfasst beispielsweise einen oder mehrere Linearantriebe, um ein jeweiliges Kalibrierwerkzeug in die Lageröffnung hinein zu verstellen und daraus wieder heraus.

Es ist aber auch eine Werkstück-Positioniereinrichtung möglich, die das Werkstück relativ zu dem ersten oder dem zweiten Kalibrierwerkzeug verstellt. Beispielsweise ist dann das jeweilige erste oder zweite Kalibrierwerkzeug ortsfest, während die Werkstücke-Positioniereinrichtung das Werkstück zum Kalibrierwerkzeug bewegt. Kombinationen sind ebenfalls möglich, das heißt dass beispielsweise eines der beiden Kalibrierwerkzeuge, zum Beispiel das erste Kalibrierwerkzeug, ortsfest ist, d.h. dass die Werkstück-Positioniereinrichtung das Werkstück zu diesem ersten Kalibrierwerkzeug für den Kalibriervorgang hinbewegt und anschließend wieder davon weg. Im zweiten Schritt führt dann eine Werkzeug-Positioniereinrichtung das zweite Kalibrierwerkzeug in die Lageröffnung hinein.

Das erste Kalibrierwerkzeug und das zweite Kalibrierwerkzeug sind beispielsweise konturgleich oder baugleich. Es ist aber auch möglich, dass das erste und das zweite Kalibrierwerkzeug voneinander verschieden sind, beispielsweise verschiedene Konturen aufweisen.

Die mindestens eine Kalibrierkontur, die an der Vertiefung vorbei bewegt wird, kann sich über einen gesamten Außenumfang oder einen Teilumfang des Kalibrierwerkzeugs erstrecken.

Es kommen unterschiedliche Kalibrierkonturen infrage, das heißt dass beispielsweise ein Kalibrierwerkzeug eine schraubenförmige Kalibrierkontur aufweist, während ein anderes Kalibrierwerkzeug, zum Beispiel ein oder das zweite Kalibrierwerkzeug, eine kugelsegmentartige Außenoberfläche hat. Die Kalibrierkontur eines Kalibrierwerkzeugs kann aber auch kreiszylindrisch sein, eine Facettierung aufweisen oder verrundete Eckbereiche haben. Vorteilhaft ist es, wenn die jeweiligen Endbereiche einer schraubenförmigen oder zylindrischen Kalibrierkontur ausgerundet sind. Es sind mehrstufige Kalibrierwerkzeuge möglich, die beispielsweise durch eine Aufreihung mehrerer einzelner Kalibrier-Scheiben mit gleichen oder unterschiedlichen Durchmessern auf einem Dorn oder einem sonstigen Werkzeugträger gebildet sind. Als Kalibrierwerkzeug ist aber auch eine ganz einfache Kugel ohne weiteres möglich.

Die Kalibrierkonturen des ersten Kalibrierwerkzeugs und des zweiten Kalibrierwerkzeugs können gleiche oder unterschiedliche Außendurchmesser aufweisen, insbesondere gleiche oder unterschiedliche Maximal-Außendurchmesser. Mithin kann also beispielsweise das erste Kalibrierwerkzeug einen kleineren Außendurchmesser aufweisen als das zweite Kalibrierwerkzeug oder umgekehrt. Es ist z.B. vorteilhaft, wenn das erste Kalibrierwerkzeug einen kleineren Außendurchmesser aufweist, als das danach auf die Lageröffnung einwirkende zweite Kalibrierwerkzeug.

Ein Kalibrierwerkzeug, also beispielsweise das erste Kalibrierwerkzeug und/oder das zweite Kalibrierwerkzeug, kann bei dem Kalibriervorgang die Lageröffnung vollständig durchdringen. Es ist aber auch möglich, dass eines oder beide der Kalibrierwerkzeuge nur teilweise in die Lageröffnung eindringen, also beispielsweise nicht bis zum gegenüberliegenden freien Ende der Lageröffnung gelangen.

An dieser Stelle sei bemerkt, dass es vorteilhaft ist, wenn dennoch eine Abstützung des Werkzeugträgers an seinem freien Ende vorgesehen ist, auch wenn dies nicht zwingend notwendig ist, jedoch die Kalibriergenauigkeit noch weiter verbessert.

Der Werkzeugträger und/oder das Kalibrierwerkzeug haben zweckmäßigerweise einen Schmiermittelkanal. Der Schmiermittelkanal oder die Schmiermittelkanäle münden zweckmäßigerweise im Bereich des Kalibrierwerkzeugs aus dem Werkzeugträger aus. Das Kalibrierwerkzeug hat vorzugsweise mindestens eine Austrittsöffnung für das Schmiermittel.

Weiterhin ist es zweckmäßig, wenn eine Schmiereinrichtung, insbesondere eine Minimalmengen-Schmiereinrichtung, vorgesehen ist.

Die Kalibriervorrichtung dient vorzugsweise dazu, eine Lageröffnung zu kalibrieren, deren freie Enden, z.B. zu Stirnseiten des Werkstücks oder einer Lagerbuchse hin, bezüglich der Kalibrierungsbahn in einer oder mehreren schräg verlaufenden Ebenen liegen. Ein Anwendungsgebiet ist die Kalibrierung sogenannter Korbhenkel-Pleuel oder sonstiger Pleuel, deren Lagerbuchsen mindestens eine schräge Stirnseite haben.

Eine Möglichkeit dazu ist beispielsweise, das Kalibrierwerkzeug im Bereich vor und/oder nach der Lager-Innenkontur abzustützen, z.B. das Kalibrierwerkzeug und/oder den dieses tragenden Werkzeugträger, beispielsweise ein sogenannter Kalibrierdorn, durch eine stützendes Bett oder durch eine Führung zu führen. Das Kalibrierwerkzeug oder der Werkzeugträger werden beispielsweise durch eine Führungshülse geführt.

Das Kalibrierwerkzeug weist zweckmäßigerweise mindestens zwei bezüglich der Kalibrierungsbahn hintereinander angeordnete Ringe auf, die jeweils die mindestens eine Kalibrierkontur aufweisen. Somit können also bezüglich der Kalibrierungsbahn nacheinander zwei Ringe die Lager-Innenkontur kalibrieren. Das Ergebnis ist dadurch besser.

Es ist auch möglich, dass mehrere Kalibrierkonturen bezüglich der Kalibrierungsbahn hintereinander angeordnet sind, die stufig zueinander sind. So ist es beispielsweise möglich, dass in Vorschubrichtung zunächst eine erste, einen kleineren Außenumfang aufweisende Kalibrierkontur in Eingriff mit der Lager-Innenkontur kommt und dann eine zweite Kalibierkontur mit einem größeren Außenumfang.

Das Kalibrierwerkzeug weist zweckmäßigerweise einen Kalibrierring auf, um dessen Außenumfang sich die mindestens eine Kalibrierkontur ringförmig erstreckt. Vor und/oder hinter dem Kalibrierring ist ein Nebenkalibrierkörper vorgesehen, an dem die mindestens eine Nebenkalibrierkontur vorgesehen ist, wobei sich diese Nebenkalibrierkontur nur teilringförmig über einen Teilumfang des Nebenkalibrierkörpers erstreckt. Der Nebenkalibrierkörper ist also beispielsweise teilringförmig.

Die ringförmige Kalibrierkontur und die teilringförmige Nebenkalibrierkontur sind vorzugsweise parallel zueinander, beispielsweise beide rechtwinkelig zur Kalibrierungsbahn. Sie können aber auch schräg zur Kalibrierungsbahn verlaufen.

Die mindestens eine Nebenkalibrierkontur kann beispielsweise schräg zur Kalibrierungsbahn verlaufen. Es ist aber auch möglich, dass die Nebenkalibrierkontur rechtwinkelig quer zur Kalibrierungsbahn verläuft.

Eine besonders bevorzugte Ausführungsform sieht vor, dass das Kalibrierwerkzeug bezüglich der Kalibrierungsbahn mindestens drei hintereinander angeordnete Ringe aufweist. Zwei Ringe sind beispielsweise als die mindestens eine Nebenkalibrierkontur aufweisende Nebenkalibrierringe ausgestaltet. Zwei Ringe können aber auch als die mindestens eine Kalibrierkontur aufweisende Kalibrierringe ausgestaltet sein. Eine Kombination ist möglich, z.B. mindestens zwei Nebenkalibrierringe und mindestens zwei Kalibrierringe.

Die Kalibriervorrichtung bildet vorzugsweise einen Bestandteil einer Werkzeugmaschine oder ist als eine Werkzeugmaschine ausgestaltet. Auch die Einbindung in ein mehrere Stationen umfassendes Bearbeitungszentrum zur Bearbeitung von Motorbauteilen, beispielsweise zur Pleuel-Bearbeitung, kann die erfindungsgemäße Kalibriervorrichtung aufweisen bzw. die Kalibriervorrichtung kann einen Bestandteil eines solchen Bearbeitungszentrums bilden. Die Werkzeugmaschine oder das Bearbeitungszentrum haben z.B. Mittel zum Einpressen einer Lagerbuchse in das Werkstück und/oder zur Herstellung, z.B. zum Bohren, der Lageröffnung. Das Bearbeitungszentrum weist beispielsweise zusätzliche Stationen zum Cracken, Fügen, Verschrauben und dergleichen weiteren Bearbeitung des Werkstücks auf.

Die Kalibriervorrichtung kann auch eine individuelle Baueinheit bilden oder eine Kalibrierstation darstellen, muss also nicht unbedingt in eine Werkzeugmaschine integriert sein oder einen Bestandteil eines Bearbeitungszentrums bilden.

Nachfolgend werden Ausführungsbeispiele der Erfindung anhand der Zeichnung erläutert. Es zeigen:
- Figur 1: eine Seitenansicht einer ersten Ausführungsform einer Kalibriervorrichtung mit einem ersten Kalibrierwerkzeug noch vor Eintritt in die Lageröffnung eines Werkstücks,
- Figur 2: ein Detail A aus Figur 1, wobei jedoch das Kalibrierwerkzeug die Lageröffnung bereits durchdrungen hat,

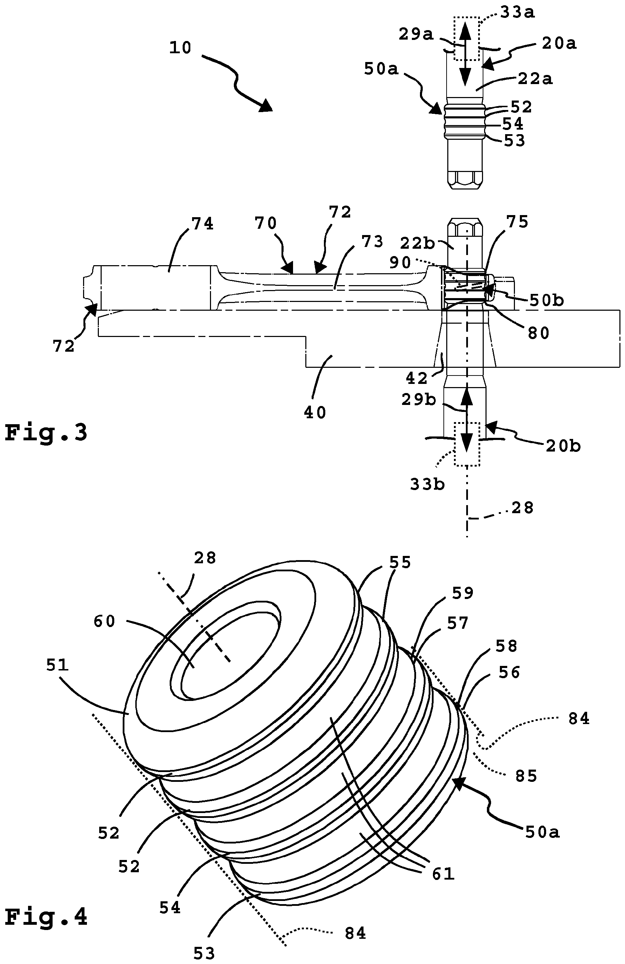

- Figur 3: eine Seitenansicht der Kalibriervorrichtung gemäß Figuren 1, 2 bei der Kalibrierung mit einem zweiten Kalibrierwerkzeug,
- Figur 4: eine perspektivische Detailansicht des Kalibrierwerkzeugs der Kalibriervorrichtung gemäß Figur 1,

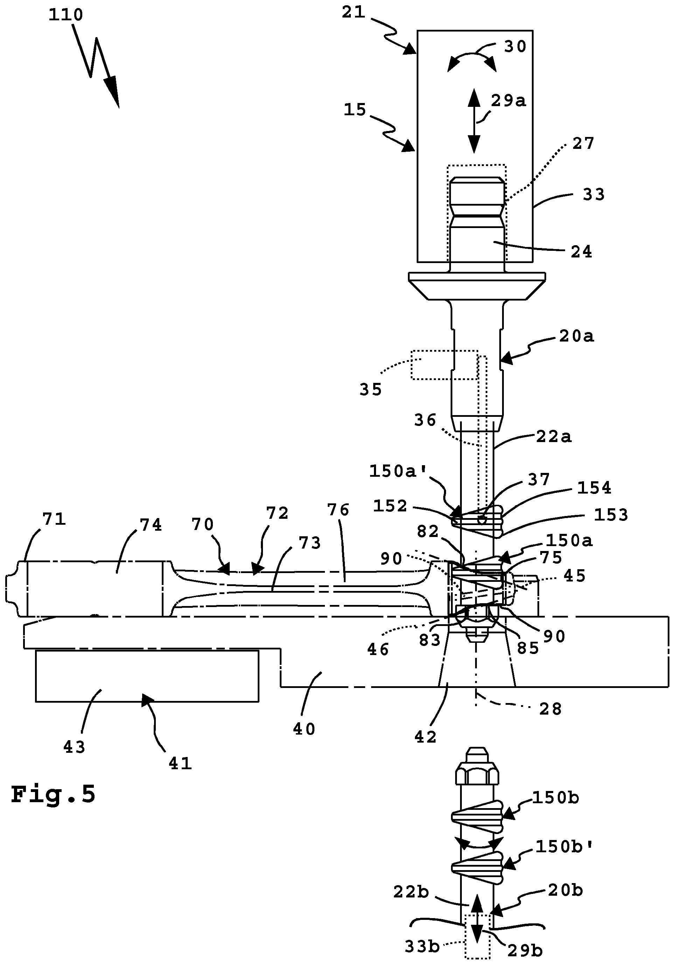

- Figur 5: die Kalibriervorrichtung gemäß Figuren 1-3, jedoch mit anderen Kalibrierwerkzeugen, von denen erste Kalibrierwerkzeuge in Eingriff mit der Lageröffnung des Werkstücks gezeigt sind,

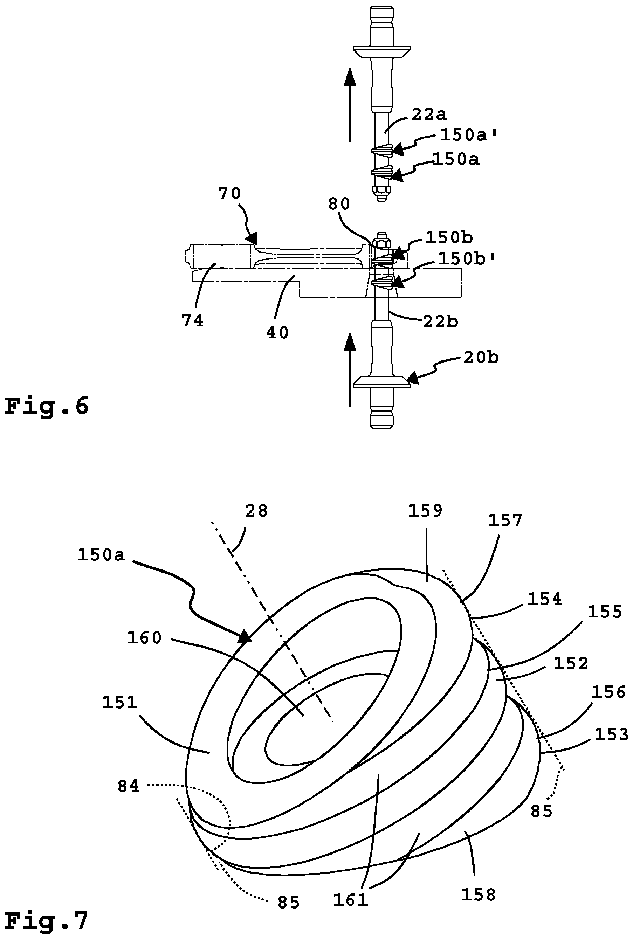

- Figur 6: die Kalibriervorrichtung gemäß Figur 5, jedoch mit den zweiten Kalibrierwerkzeugen in Eingriff mit der Lageröffnung,
- Figur 7: eine perspektivische Schrägansicht eines der Kalibrierwerkzeuge der Kalibriervorrichtung gemäß Figuren 5, 6,
- Figur 8: eine Seitenansicht alternativer Kalibrierwerkzeuge für die Kalibriervorrichtung gemäß Figuren 5, 6 mit einem geschnitten dargestellten Werkstück und
- Figur 9: eine Seitenansicht weiterer alternativer Kalibrierwerkzeuge für die Kalibriervorrichtung gemäß Figuren 5, 6.

In der Zeichnung sind Kalibriervorrichtungen 10, 110 zum Kalibrieren von Werkstücken 70 dargestellt, die teilweise gleiche oder ähnliche Komponenten haben, die dann mit denselben Bezugsziffern versehen sind, gegebenenfalls mit einer Differenz von 100.

Bei den Werkstücken 70 handelt es sich um Motorbauteile 71, ganz konkret Pleuel 72. Die Pleuel 72 weisen einen Pleuelschaft 73 sowie zwei Lageröffnungen, nämlich ein so genanntes großes Auge 74 und ein kleines Auge 75 auf. Die Kalibriervorrichtungen 10 und 110 dienen zur Bearbeitung der Lageröffnung, die am kleinen Auge 75 vorgesehen ist. In eine Lageraufnahme 77 eines Grundkörpers 76 des Werkstücks 70, die am kleinen Auge 75 vorgesehen ist, ist in einem vorherigen Arbeitsschritt beispielsweise eine Lagerbuchse 80, mithin also ein Ringkörper, eingepresst worden.

Die Lagerbuchse 80 hat eine obere Stirnseite 82 sowie eine untere Stirnseite 83. Ein Innenumfang der Lagerbuchse 80 bildet eine Lageröffnung 85 und hat eine Lager-Innenkontur 84, die es zu kalibrieren gilt. Nach dem Einpressen der Lagerbuchse 80 ist nämlich die Lager-Innenkontur 84 noch nicht im gewünschten Umfang maßgenau. Ferner ist es vorteilhaft, wenn die Lagerbuchse 80 von der Lageröffnung 85 her nach radial außen in den Innenraum des kleinen Auges 75 gepresst wird, so dass sich dort die einander gegenüberliegenden Flächen des Pleuels 72 und der Lagerbuchse 80 optimal miteinander verbinden, quasi miteinander verzahnen.

Dazu sind Kalibrierwerkzeuge 50 und 150 vorgesehen, die nachfolgend zur Unterscheidung ihrer Einwirkrichtung auf das Werkstück 70 als Kalibrierwerkzeuge 50a, 50b oder 150a, 150b bezeichnet werden. Die Kalibrierwerkzeuge 50a, 150a der Kalibriervorrichtungen 10, 110 sind an einem Werkzeugträger 20a angeordnet, die Kalibrierwerkzeuge 50b, 150b der Kalibriervorrichtungen 10, 110 sind an einem Werkzeugträger 20b angeordnet.

Es wäre ohne weiteres denkbar, dass nur einer der Werkzeugträger 20a oder 20b vorgesehen ist, was später noch deutlich wird. Eine Bearbeitung oder Kalibrierung von einander entgegengesetzten Seiten her ist nämlich eine Option und nicht in jedem Fall notwendig.

Die Werkzeugträger 20a, 20b umfassen Tragstäbe oder Dorne 22a, 22b, an deren freien, von der Werkzeug-Positioniereinrichtung 21 entfernten Endbereichen, den freien Enden 25, Werkzeugaufnahmen 23 vorgesehen sind.

Das Werkstück 70 wird von einem Werkstückhalter 40 gehalten.

Die Kalibrierwerkzeuge 50a, 50b oder 150a, 150b und das Werkstück 70, insbesondere der Werkstückhalter 40, sind anhand einer Positioniereinrichtung 15 relativ zueinander positionierbar, um die Lager-Innenkontur 84 zu kalibrieren.

Die Werkzeugträger 20a, 20b sind durch eine Werkzeug-Positioniereinrichtung 21 der Positioniereinrichtung 15 positionierbar, nämlich Antriebe 33a, 33b, die einen oder mehrere Linearantriebe und/oder Drehantriebe aufweisen können. Ein Halteabschnitt 24, beispielsweise ein Schaft, eines Werkzeugträgers 20a, 20b ist in einer Werkzeugträger-Aufnahme 27 eines jeweiligen Antriebs 33a, 33b der Werkzeug-Positioniereinrichtung 21 aufgenommen.

Die Werkzeug-Positioniereinrichtung 21 kann die Dorne oder Tragstäbe 22a, 22b entlang der Kalibrierungsbahn 28 in einer Vorschubbewegung 29a, 29b zu dem Werkstückhalter 40 linear vor und zurück bewegen. Der Vorschubbewegung 29a, 29b kann eine Drehbewegung 30 überlagert sein oder die Vorschubbewegung 29a, 29b und die Drehbewegung 30 finden sequentiell statt.

Die Positioniereinrichtung 15 kann auch eine Werkstück-Positioniereinrichtung 41 umfassen, um den Werkstückhalter 40 und somit das dort daran gehaltene Werkstück 70 bzw. das Pleuel 72 relativ zu einem oder beiden Werkzeugträgern 20a, 20b der Kalibriervorrichtung 10, 110 zu positionieren. Beispielsweise umfasst die Werkstück-Positioniereinrichtung 41 einen oder mehrere Antriebe 43, z.B. Linearantriebe und/oder Drehantriebe oder dergleichen, zum Verstellen oder Antreiben des Werkstückhalters 40 zu einem oder beiden der beiden Werkzeugträger 20a, 20b hin oder davon weg. Auch beim Werkstückhalter 40 bzw. der Werkstück-Positioniereinrichtung 41 sind eine lineare Bewegung, entsprechend der Vorschubbewegungen 29a und/oder 29b, und/oder eine Drehbewegung, entsprechend der Drehbewegung 30, möglich. Die Drehbewegung und die lineare Bewegung sind sequentiell oder einander überlagert möglich.

Es ist möglich, dass Werkstück-Positioniereinrichtung 41 z.B. nur eine der Drehbewegung 30 entsprechende Drehbewegung leistet, die Werkzeug-Positioniereinrichtung 21 nur die Vorschubbewegungen 29a, 29b.

Die Werkzeugträger 20a, 20b dienen zum Tragen der Kalibrierwerkzeuge 50a, 50b der Kalibriervorrichtung 10 oder der Kalibrierwerkzeuge 150a, 150b der Kalibriervorrichtung 110. Beispielsweise durchdringt der Werkzeugträger 20a, 20b mit seinem freien Ende 25 zunächst die Lageröffnung 85 und führt dabei das Kalibrierwerkzeug 50a, 50b, 150a, 150b durch die Lageröffnung 85 hindurch, so dass die Lager-Innenkontur 84 kalibriert wird. Dabei durchdringt das freie Ende 25 beispielsweise eine Öffnung 42 am Werkstückhalter 40.

Unterhalb der Öffnung 42 kann optional eine Stütze oder Führung 26 vorgesehen sein, auf der sich der Werkzeugträger 20a mit seinem freien Ende 25 unterseitig abstützt oder an der der Werkzeugträger 20a unterhalb des Werkstückhalters 40 geführt ist. Dadurch ist die Vorschubbewegung 29a nicht nur durch die Werkzeug-Positioniereinrichtung 21, d.h. im Bereich des Halteabschnitts 24 geführt, sondern auch im Bereich des freien Endes 25. Wenn der Werkzeugträger 20b jedoch in die Lageröffnung 85 einfährt, ist die Führung 26 entfernt. Dann kann optional oberhalb der Lageröffnung 85 eine der Führung 26 baulich entsprechende Führung angeordnet sein (nicht dargestellt).

Zur weiteren Verbesserung der Kalibrierung dient auch beispielsweise eine Schmiervorrichtung 35, vorteilhaft eine Minimalmengenschmiervorrichtung, die über einen Kanal 36, der im Werkzeugträger 20a verläuft, Schmiermittel oder Kühlmittel zum Kalibrierwerkzeug 50a und/oder 50b oder 150a und/oder 150b fördert, welches an einer Austrittsöffnung 37 des Kalibrierwerkzeugs 50a, 50b oder 150a, 150b ausmündet. Selbstverständlich kann der Kanal 36 auch oberhalb oder unterhalb des Kalibrierwerkzeugs 50a, 50b oder 150a, 150b ausmünden, so dass dennoch das Schmiermittel in den Bereich des Kalibrierwerkzeugs 50a, 50b oder 150a, 150b während des Kalibrierens oder im Zusammenhang mit dem Kalibrieren gelangt.

Eine weitere Schwierigkeit bei dem Kalibrieren ergibt sich beispielsweise dadurch, dass die obere und die untere Stirnseite 82 und 83 der Lagerbuchse 80 quer zur Kalibrierungsbahn 28 jeweils einen Schrägverlauf bzw. eine gekrümmte Kontur haben.

Das Konzept der Kalibrierwerkzeuge 50a oder 150a eignet sich dazu, trotz der schräg verlaufenden oberen und unteren Stirnseiten 82 und 83 der Lagerbuchse 80 eine optimale Kalibrierung zu leisten. Die Stütze und/oder Führung 26 ist zwar auch in diesem Fall vorteilhaft, jedoch nicht notwendig.

Die Kalibrierwerkzeuge 50a und 50b sowie die Kalibrierwerkzeuge 150a, 150b sind jeweils baugleich. Nachfolgend werden vereinfacht die Kalibrierwerkzeuge 50a, 150a erläutert.

Die Kalibrierwerkzeuge 50a, 150a weisen Werkzeugkörper 51, 151 auf, an denen zum einen Kalibrierkonturen 52 und 152, zum andern Nebenkalibrierkonturen 53 und 54 bzw. 153 und 154 vorgesehen sind. Die Kalibrierkonturen 52, 152 dienen zum Kalibrieren der Lage-Innenkontur 84, d.h. zur Einstellung eines exakten Maßes der Lageröffnung 85.

Die Kalibrierwerkzeuge 50a und 150a weisen beispielsweise Kalibrierringe 55, 155 sowie Nebenkalibrierkörper 56, 57, 156, 157 auf. Die Nebenkalibrierkörper 56 und 57 sind als Nebenkalibrierringe 58 und 59 ausgestaltet, während die Nebenkalibrierkörper 156 und 157 sozusagen Teilringkörper 158, 159 darstellen. Die Kalibrierwerkzeuge 50a und 150a können also aus einzelnen Ringen aufgebaut sein, aber auch einstückig sein, das heißt einen durchgehenden Werkzeugkörper 51 bzw. 151 aufweisen, an dem dann die Kalibrierkonturen 52, 152 sowie die Nebenkalibrierkonturen 53, 54 bzw. 153, 154 vorgesehen sind.

Das Kalibrierwerkzeug 50a, 50b hat zwei bezüglich der Vorschubbewegung 29a, 29b nacheilende Kalibrierkonturen 52 bzw. zwei Kalibrierringe 55. Bezüglich der Kalibrierungsbahn 28 bzw. der Vorschubbewegung 29a, 29b vorauseilend sind neben dem einen der Kalibrierringe 55 Nebenkalibrierringe 58 und 59 angeordnet. Der Außenumfang der Nebenkalibrierringe 58 und 59 ist kleiner als derjenige der Kalibrierringe 55. Beispielsweise haben die Nebenkalibrierringe 58 und 59 und der sich daran anschließende Kalibrierring 55 stufig ansteigende Außendurchmesser, die beispielsweise um jeweils etwa 0,02-0,03 mm ansteigend sind, zum Beispiel bei einem Gesamt-Durchmesser von etwa 18-19 mm. Die beiden Kalibrierringe 55 haben vorzugsweise denselben Außendurchmesser, wirken also in gleichem Maße kalibrierend.

Es ist aber alternativ auch möglich, dass z.B. der obere Kalibrierring 55 einen größeren oder kleineren Außendurchmesser als der untere Kalibrierring 55 hat.

Das Kalibrierwerkzeug 150a hingegen hat nur einen, sozusagen zentralen Kalibrierring 155, dem in Bezug auf die Vorschubbewegung 29a, 29b ein Teilringkörper 158 vorgelagert ist, also die teilringförmige Nebenkalibrierkontur 153, und in Bezug auf die Vorschubbewegung 29a, 29b nacheilend die ebenfalls teilringförmige Nebenkalibrierkontur 154, die am Teilringkörper 159 vorgesehen ist.

Zur lösbaren Befestigung des Kalibrierwerkzeugs 50a, 50b, 150a, 150b am Werkzeugträger 20a dient eine Aufnahme 60, 160, zum Beispiel eine Bohrung. Die Aufnahme 60, 160 ist zur Befestigung an der Werkzeugaufnahme 23 des Werkzeugträgers 20a vorgesehen, zum Beispiel zum Einstecken des freien Endes 25 in die Aufnahmen 60, 160.

Die Kalibrierkonturen 52 und 152 und die Nebenkalibrierkonturen 53, 54 bzw. 153, 154 haben jeweils einen kugelsegmentförmigen Querschnitt. Zwischen den Kalibrierkonturen 52 und 152 und den Nebenkalibrierkonturen 53, 54 bzw. 153, 154 sind jeweils Vertiefungen 61, 161, beispielsweise in der Art von Einschnürungen oder Taillierungen, vorgesehen.

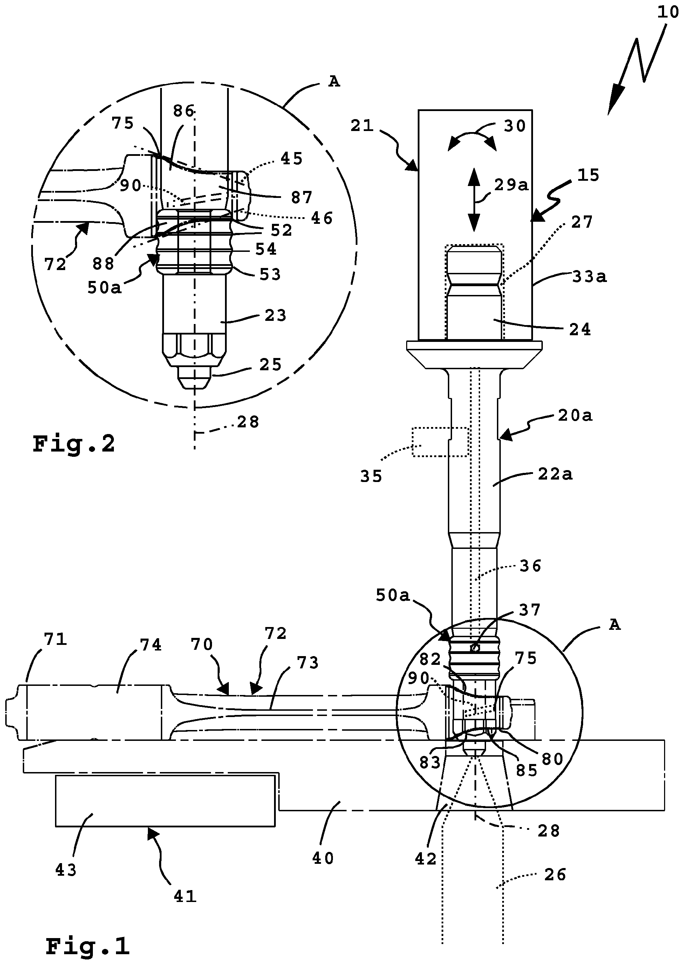

Der Kalibriervorgang mit dem Kalibrierwerkzeug 50a verläuft folgendermaßen. Ausgehend von beispielsweise der Position gemäß Figur 1 wird das Kalibrierwerkzeug 50a, 150a in die Lageröffnung 85 entlang der Kalibrierungsbahn 28 im Rahmen der Vorschubbewegung 29a hinein bzw. durch die Lageröffnung 85 hindurch bewegt, in der Zeichnung also von oben her. Dann wird das Kalibrierwerkzeug 50b, 150b von der entgegengesetzten Seite der Lageröffnung 85 her im Rahmen der Vorschubbewegung 29b hinein bzw. durch die Lageröffnung 85 hindurch bewegt.

Bei der Vorschubbewegung 29a, 29b des Kalibrierwerkzeugs 50a, 50b stützen sich zunächst die beiden Nebenkalibrierkonturen 53 und 54 an der Lager-Innenkontur 84 ab. Die Nebenkalibrierkonturen 53 und 54 können eine Vor-Kalibrierung durchführen, das heißt den Kalibriervorgang einleiten. Allerdings haben die Nebenkalibrierkonturen 53 und 54 einen kleineren Außendurchmesser als die Kalibrierkonturen 52, die nach den Nebenkalibrierkonturen 53 und 54 in Eingriff mit der Lager-Innenkontur 84 gelangen und diese kalibrieren.

Die näher bei den Nebenkalibrierkonturen 53 und 54 befindliche Kalibrierkontur 52 ist bei der Vorschubbewegung 29a, 29b entlang der Kalibrierungsbahn 28 zunächst in kalibrierendem Eingriff mit einem oberen, quer zur Kalibrierungsbahn 28 nur teilringförmigen und somit nicht ringförmig geschlossenen Bereich 86 der Lageröffnung 85, wobei allerdings während dieser Kalibrierung die Nebenkalibrierkonturen 53 und 54 möglicherweise nicht im ausreichenden Maße abstützend wirken. Der Kalibrierring 55 kann also in den dem Bereich 86 gegenüberliegenden offenen (in der Zeichnung rechts) Bereich ausweichen und den Bereich 86 der Lageröffnung 85 noch nicht im gewünschten Maß kalibrieren. Dennoch stützen bereits die Nebenkalibrierringe 58 und 59 das Kalibrierwerkzeug 50a bzw. die in der Zeichnung untere Kalibrierkontur 52 in einer bezüglich der Kalibrierungsbahn 28 schräg verlaufenden Ebene 45, nämlich im mittleren Bereich 87 der Lageröffnung 85, ab.

Es ist exemplarisch nur eine schräge Ebene 45 eingezeichnet. Selbstverständlich sind vorteilhaft weitere derartige schräge Ebenen vorhanden, auch in anderen Winkelstellungen bezüglich der Kalibrierungsbahn 28, weil ja die obere Stirnseite 82 keinen Diagonalverlauf hat, sondern einen gekrümmten Verlauf.

Wenn jedoch der den Nebenkalibrierringen 58, 59 nähere Kalibrierring 55 dann weiter in die Lageröffnung 85 eindringt (in der Zeichnung nach unten) stützt er sich im mittleren, vollständig ringförmigen geschlossenen Bereich 87 der Lageröffnung 85 ab, das heißt er kalibriert diesen Bereich 87 und wirkt gleichzeitig als ein Nebenkalibrierring oder eine Nebenkalibrierkontur für den weiteren (oberen) Kalibrierring 55, der dann den Bereich 86 kalibriert. Die Kalibrierringe 55 stützen sich in der Lageröffnung 85 also bezüglich mindestens einer bzw. mehreren schräg verlaufenden Ebenen 45 sozusagen wechselseitig ab.

Im weiteren Verlauf der Kalibrierung ändern sich dann die Rollen der beiden Kalibrierringe 55. Wenn nämlich der in der Zeichnung untere, näher bei den Nebenkalibrierringen 58, 59 befindliche Kalibrierring 55 in den unteren, ebenfalls nur teilringförmigen Bereich 88 der Lageröffnung 85 gelangt, ist der in der Zeichnung obere Kalibrierring 55 noch im mittleren Bereich 87 der Lageröffnung 85 und stützt sich dort optimal ab. Die Kalibrierringe 55 sind also in einer bezüglich der Kalibrierungsbahn 28 weiteren, zur Ebene 45 gegensinnig schräg geneigten schrägen Ebene 46 in Eingriff bzw. in kalibrierendem Kontakt mit der Lageröffnung 85. Der (in der Zeichnung obere) im Bereich 86 befindliche Kalibrierring 55 ist dann sozusagen ein Nebenkalibrierring oder eine Nebenkalibrierkontur für den (in der Zeichnung unteren) Kalibrierring 55, der in Eingriff mit dem Bereich 87 der Lageröffnung ist bzw. diesen kalibriert.

Selbstverständlich könnten noch weitere Kalibrierringe vorgesehen sein, was dann das Ergebnis verbessert. Im Prinzip ist das bei der Kalibriervorrichtung 110 realisiert, an deren Werkzeugträger 20a neben dem Kalibrierwerkzeug 150a ein weiteres Kalibrierwerkzeug 150a' vorgesehen ist, das vorzugsweise gleichartig ausgestaltet ist. Auch am anderen Werkzeugträger 20b können entsprechend zwei zweite Kalibrierwerkzeuge 150b und 150b' vorgesehen sein. Eine vorteilhafte Ausführungsform sieht dabei vor, dass zunächst die beiden vorderen Kalibrierwerkzeuge 150a und 150b die Lageröffnung 85 von den einander entgegengesetzten Seiten her kalibrieren und dann die weiteren Kalibrierwerkzeuge 150a' und 150b' die Kalibrierung sozusagen verfeinern.

Selbstverständlich könnten auch beispielsweise unterschiedliche Kalibrierwerkzeuge an einem Werkzeugträger 20a vorgesehen sein, zum Beispiel zunächst bezüglich der Vorschubrichtung der Vorschubbewegung 29a, 29b ein Kalibrierwerkzeug 150a und sodann ein weiteres Kalibrierwerkzeug 50a. Die Wirkungsweise der Kalibrierwerkzeuge 50a und 150a ist ähnlich, was nachfolgend deutlich wird.

Wenn bei dem Kalibriervorgang der Kalibriervorrichtung 110, das heißt bei der Vorschubbewegung 29a, 29b in Richtung der Lageröffnung 85 hinein, zunächst die sozusagen vorauseilende Nebenkalibrierkontur 153 bereits im mittleren Bereich 87 der Lageröffnung 85 ist und sich dort abstützt, kann sie bezüglich der schrägen Ebene 45 als eine Abstützung für den sich nunmehr im oberen Bereich 86 der Lageröffnung 85 befindlichen Kalibrierring 155 dienen. Dessen Kalibrierkontur 152 kann dann den Bereich 87 bereits kalibrieren.

Sodann durchläuft der Kalibrierring 155 den mittleren Bereich 87 und anschließend den in der Zeichnung unteren, ebenfalls nur teilweise ringförmigen Bereich 88. Dort kann sich der Kalibrierring 155 nicht mehr sozusagen selbst in der Lageröffnung 85 abstützen, da er unterhalb der unteren schrägen Ebene 46 teilweise sozusagen im Freien ist. Hier wirkt dann die obere Nebenkalibrierkontur 154, die in einem dem Bereich 88 gegenüberliegenden Abschnitt des mittleren Bereichs 86 in Berührkontakt bzw. sich abstützend an der Lageröffnung 85 anliegt.

Die Kalibrierung kann durch das weitere, sich im Rahmen der Vorschubbewegung 29a, 29b durch die Lageröffnung 85 hindurch bewegende Kalibrierwerkzeug 150' verbessert werden.

Die obigen Kalibrierwerkzeuge 50a-150b eignen sich zwar in besonderer Weise für die Kalibrierung von Lagerhülsen, die jeweils schräge Stirnseiten haben, d.h. dass die Kalibrierung einer Innenwand auf einer Seite bereits beginnt, wo gegenüberliegend noch keine Abstützung des Kalibrierwerkzeugs möglich ist. Die Kalibrierwerkzeuge 50a-150b ermöglichen es, die Lageröffnung 85 von einander entgegengesetzten Seiten her zu bearbeiten, was ein hervorragendes Kalibrierergebnis ergibt.

An der Lager-Innenkontur 84 ist beispielsweise eine Vertiefung 90 angeordnet. Die Vertiefung 90 hat einen Schrägverlauf 91 schräg zur Kalibrierungsbahn 28 und schräg auch zu einer Orthogonalen 31 bezüglich der Kalibrierungsbahn 28. Die Vertiefung 90 bildet beispielsweise eine Ölnut oder ist als Ölnut ausgestaltet. Die Vertiefung 90 ist beispielsweise vor der Kalibrierung bereits an der Lager-Innenkontur 84 vorhanden, so dass an sie die Gefahr besteht, dass beim Kalibrieren der Lageröffnung 85 die Nut oder Vertiefung 90 beschädigt wird oder dazu führt, dass sich das Kalibrierwerkzeug in der Vertiefung 90 verhakt und dann die Lagerbuchse 80 aus der Lageraufnahme 77 herausgeschoben wird. Dagegen sind jedoch Maßnahmen getroffen.

Wenn die orthogonal zur Kalibrierungsbahn 28 verlaufenden Kalibrierkonturen 52 oder 152 an der Vertiefung 90 vorbei bewegt werden, gelangen unterschiedliche Abschnitte der Kalibrierkonturen 52, 152 im Verlauf dieser Vorschubbewegung in Kontakt oder in Eingriff mit der Vertiefung 90. Die Kalibrierkonturen 52, 152 können sich mit der Vertiefung 90 nicht verhaken oder die Vertiefung 90 durch entsprechende massive Krafteinwirkung verformen. Dadurch ist die Gefahr, dass die Lagerbuchse 80 aus der Lageraufnahme 77 sozusagen herausgeschoben oder herausgezogen wird, vermieden.

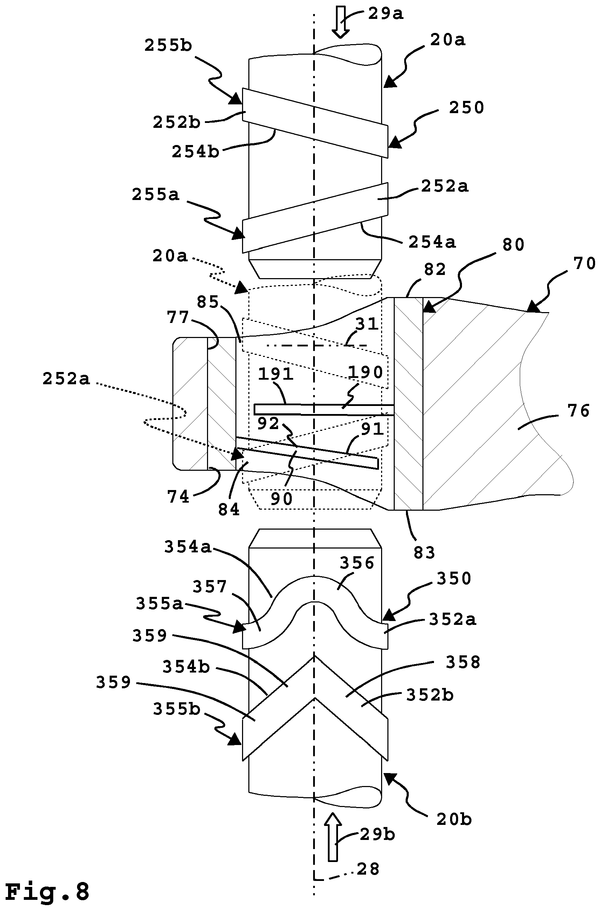

Es ist aber nicht immer der Fall, dass eine Vertiefung schräg zur Orthogonalen 31 bezüglich einer Kalibrierungsbahn verläuft, was beispielsweise bei der Vertiefung 190 (Figur 8) der Fall ist. Die Vertiefung 190 hat beispielsweise einen bezüglich der Kalibrierungsbahn 28 orthogonalen Verlauf.

Beispielsweise erstrecken sich die Vertiefungen 90, 190 über einen Teil-Innenumfang oder den gesamten Innenumfang der Lager-Innenkontur 84.Selbstverständlich ist es möglich, dass beispielsweise die Vertiefungen 90, 190 Bestandteile einer durchgehenden, sich über einen größeren Anteil des Innenumfangs der Lager-Innenkontur 84 erstreckenden Vertiefung sind.

An dem Werkzeugträger 20a kann beispielsweise ein Kalibrierwerkzeug 250 angeordnet sein, dass bezüglich der Kalibrierungsbahn 28 schräg verlaufende Kalibrierkonturen 252a und 252b aufweist. Die Kalibrierkonturen sind beispielsweise an Kalibrierringen 255a und 255b vorgesehen. Die Kalibrierringe 255a und 255b können beispielsweise nur einen Teilumfang oder den gesamten Außenumfang des Werkzeugträgers 20a umgeben. Weiterhin ist es möglich, dass die Kalibrierkonturen 252a und 252b anders als in der Zeichnung dargestellt an ihrem Außenumfang beispielsweise eine Wölbung oder Bombierung aufweisen.

Die Kalibrierkonturen 252a und 252b haben beispielsweise Schrägverläufe 254a und 254b, die jeweils schräg zur Orthogonalen 31 und zur Kalibrierungsbahn 28 sind. Allerdings sind die Schrägneigungen der Kalibrierkonturen 252a und 252b gegensinnig. Beide Schrägneigungen der Kalibrierkonturen 252a und 252b sind jedoch so unterschiedlich zum Verlauf der Vertiefungen 90, 190, dass die Kalibrierkonturen 252a und 252b im Verlauf der Vorschubbewegung entlang der Kalibrierungsbahn 28 stets nur mit Teilabschnitten der Vertiefungen 90, 190 in Eingriff gelangen. Beispielsweise ist in der gestrichelten Darstellung des Kalibrierwerkzeugs 250 die Kalibrierkontur 252a mit einem Teilabschnitt 92 der Vertiefung 90 in Eingriff. Die gestrichelte Darstellung des Kalibrierwerkzeugs 250 bzw. des Werkzeugträgers 20a zeigt den Werkzeugträger 20a nach einem Teilabschnitt der Vorschubbewegung entlang der Bewegungsbahn 28.

Die Schrägneigungen der Kalibrierkontur 252b und der Vertiefung 90 sind zwar gleichsinnig bezüglich der Orthogonalen 31 oder bezüglich der Bewegungsbahn 28, jedoch in einem unterschiedlichen Winkel zur Orthogonalen 31 oder zur Bewegungsbahn 28.

Es besteht also an sich ein gewisses Risiko, dass die Kalibrierkontur 252 mit relativ langen Teilabschnitten der Vertiefung 90 in Eingriff gelangen könnte. Es kann daher vorteilhaft vorgesehen sein, dass die Kalibrierkontur 252b nicht mit der Vertiefung 90 in Eingriff gelangt. Mithin wird also das Kalibrierwerkzeug 250 nur so weit in die Lageröffnung 85 eingeschoben, dass zwar die Kalibrierkontur 252a an den Vertiefungen 190 und anschließend 90 vorbei bewegt wird, die Kalibrierkontur 252b jedoch nur an der Vertiefung 190 vorbei gelangt, so dass sie sich mit der Vertiefung 190 zum Beispiel nicht verhaken kann.

Alternativ oder ergänzend dazu kann aber auch ein weiteres, anderes ausgestaltetes Kalibrierwerkzeug 350 beispielsweise am Werkzeugträger 20b angeordnet sein. An dieser Stelle sei nochmals betont, das beispielweise nur das Kalibrierwerkzeug 250 oder nur das Kalibrierwerkzeug 350 vorgesehen sein können. Mithin ist also eine Bearbeitung oder Kalibrierung nur von einer Seite des zu kalibrierenden Werkstücks her eine bevorzugte und vorteilhafte Maßnahme.

Das Kalibrierwerkzeug 350 weist beispielsweise Kalibrierkörper 355a und 355b auf, die bezüglich der Bewegungsbahn 28 bzw. der Längserstreckung des Kalibrierwerkzeugs 350 einen Längsabstand aufweisen. Somit gelangen nacheinander von den Kalibrierkörpern 355a und 355b bereitgestellte Kalibrierkonturen 352a und 352b in Eingriff mit den Vertiefungen 90 und 190, wenn der Werkzeugträger 20b von der in der Zeichnung dargestellten unteren Position entlang der Bewegungsbahn 28 in Richtung der Lagerbuchse 80 bzw. der Lageröffnung 85 bewegt wird und in die Lageröffnung 85 eindringt.

Alternativ wäre es aber auch möglich, dass das Kalibrierwerkzeug 350 nur den Kalibrierkörper 355a oder nur den Kalibrierkörper 355b aufweist. Es ist auch möglich, dass beim Kalibrierwerkzeug 350 weitere Kalibrierkörper vorgesehen sind, beispielsweise quer zur Kalibrierungsbahn 28 verlaufende Ringkonturen. Das Kalibrierwerkzeug 350 kann auch eine Folge von zwei oder mehreren der Kalibrierkörper 355a oder 355b aufweisen.

Die Kalibrierkontur 352a weist beispielsweise einen Vorsprung 356 auf, der einen bogenförmigen oder gekrümmten Verlauf aufweist. Seitlich erstrecken sich neben dem Vorsprung 356 in Bezug auf die Bewegungsrichtung zur Lageröffnung 85 hin zurück versetzte Abschnitte 357 der Kalibrierkontur 352a. Diese gelangen bei der Bewegung entlang der Bewegungsbahn 28 nach dem Vorsprung 356 mit der Lageröffnung 85 und dementsprechend auch sequenziell in Eingriff mit den Vertiefungen 190 und 90. Die Abschnitte 357 und der Vorsprung 356 erstrecken sich jeweils über einen Teilaußenumfang des Kalibrierwerkzeugs 350 bzw. des Werkzeugträgers 20b, so dass jeweils nur Teilabschnitte der Kalibrierkontur 352a in Eingriff mit den Vertiefungen 90 und 190 gelangen oder anders formuliert im Verlauf der Vorschubbewegung 29a entlang der Kalibrierungsbahn 28 die Kalibrierkontur 352a nur mit Teilabschnitten der Vertiefungen 90 und 190 in Eingriff gelangt.

Die Kalibrierkontur 352b hat einen keilförmigen Verlauf. Ein Keilvorsprung wird beispielsweise durch Schenkel 359 und 358 gebildet, die bezüglich der Bewegungsrichtung zu der Lageröffnung 85 hin entlang der Kalibrierungsbahn 28 spitz aufeinander zu laufen, also einen Keil bilden. Selbst bei der orthogonal bezüglich der Bewegungsbahn 28 verlaufenden Vertiefung 190 gelangen also nur jeweils relativ kurze Teilabschnitte der Vertiefung 190 in Eingriff mit der Kalibrierkontur 352b.

Das Kalibrierwerkzeug 350 hat beispielsweise an der Kalibrierkontur 352a gekrümmte oder bogenförmige Schrägverläufe 354a. Bei der Kalibrierkontur 352b hingegen sind bezüglich der Bewegungsbahn 28 zueinander winkelige Schrägverläufe 354b vorgesehen, die jedoch geradlinig sind.

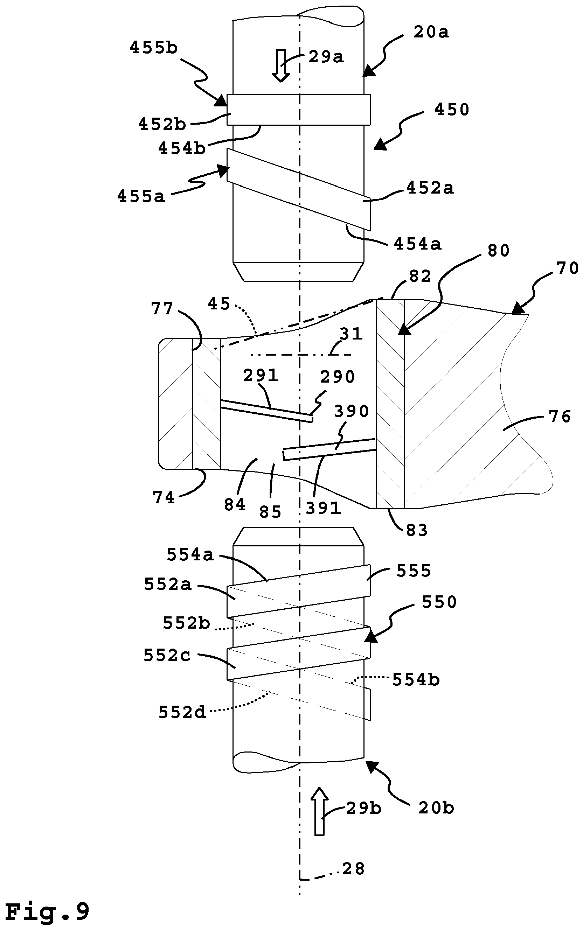

Am Ausführungsbeispiel gemäß Figur 9 werden noch andere Ausführungsformen von Kalibrierwerkzeugen vorgestellt.

Bei einem Kalibrierwerkzeug 450 sind beispielsweise Kalibrierkonturen 452a und 452b vorgesehen. Die Kalibrierkonturen 452a und 452b sind beispielsweise an Kalibrierkörpern oder Kalibrierringen 455a und 455b vorgesehen. Diese erstrecken sich beispielsweise über den gesamten Außenumfang oder einen Teilumfang des Werkzeugträgers 20a.

Die Kalibrierkontur 452a hat einen Schrägverlauf 454 bezüglich der Kalibrierungsbahn 28 sowie der Orthogonalen 31 zu der Kalibrierungsbahn 28, der sich jedoch von einem Winkel bezüglich der Kalibrierungsbahn 28 sowie der Orthogonalen 31 zu der Kalibrierungsbahn 28 unterscheidet, den ein Schrägverlauf 291 einer Vertiefung 290 an der Lager-Innenkontur 84 aufweist. Somit gelangt beim Vorschub 29a des Kalibrierwerkzeugs 450 entlang der kalibrierbar 28 in die Lager-Innenkontur 84 hinein bzw. in die Lageröffnung 85 hinein nur jeweils ein Teilabschnitt der Kalibrierkontur 452a in Eingriff mit der Vertiefung 290. Die Vertiefung 290 ist beispielsweise ebenfalls eine Ölnut.

Die Kalibrierkontur 452b hingegen ist orthogonal zur Bewegungsbahn oder Kalibrierungsbahn 28. Somit gelangt auch diese bei einer Vorschubbewegung 29b des Kalibrierwerkzeugs 450 durch die Lageröffnung 85 hindurch oder jedenfalls in diese hinein nur jeweils mit einem Teilabschnitt der nicht zur Bewegungsbahn oder Kalibrierungsbahn 28 orthogonalen Vertiefung 290.

Die Kalibrierkontur 452b kann auch nur als eine Nebenkalibrierkontur oder Stützkontur dienen oder ausgestaltet sein, die unterstützend für die in diesem Fall als Hauptkalibrierkontur vorgesehene Kalibrierkontur 452a wirkt. Beispielsweise kann die Kalibrierkontur 452b zum Abstützen bezüglich der schräg verlaufenden Ebene 45 an der oberen Stirnseite 82 bzw. an der Eindringöffnung der Lageröffnung 85 dienen.

An dieser Stelle sei erwähnt, dass die bereits erläuterten Nebenkalibrierkörper oder Nebenkalibrierringe oder Nebenkalibrierkonturen auch bei den Kalibrierwerkzeugen 250, 350, 450 oder dem nachfolgend noch erläuterten Kalibrierwerkzeug 550 vorgesehen sein können, um bei der Kalibrierung der Lageröffnung 85 unterstützend zu wirken. Die Lageröffnung 85 ist nämlich schrägverlaufend oder bogenförmig, jedenfalls nicht orthogonal zur Kalibrierungsbahn 28.

Ein beispielsweise am Werkzeugträger 20b angeordnetes oder anordenbares Kalibrierwerkzeug 550 umfasst beispielsweise einen schraubenförmigen Kalibrierkörper 555. Der Kalibrierkörper 555 erstreckt sich also beispielsweise schraubenförmig um den Außenumfang des Werkzeugträgers 20b herum. Beispielsweise hat der Kalibrierkörper 555 Kalibrierkonturabschnitte 552a, 552b, 552c, 552d, die vorzugsweise miteinander verbunden sind, insbesondere also die Schraubenlinie ausbilden. Die Kalibrierkonturabschnitte 552a, 552c sind beispielsweise in der Zeichenebene vordere und die Kalibrierkonturabschnitte 552b, 552d hintere Kalibrierkonturabschnitte.

In nicht in der Zeichnung dargestellter Weise könnten die Kalibrierkonturabschnitte 552a, 552b, 552c, 552d auch Abstände zueinander haben.

Die Kalibrierkonturabschnitte 552a und 552c gelangen beispielsweise nur mit solchen Bereichen der Lageröffnung 85 in Eingriff, an denen keine Vertiefung angeordnet ist. Die Kalibrierkonturabschnitte 552b und 552d hingegen werden beispielsweise im Rahmen der Vorschubbewegung 29b des Kalibrierwerkzeugs 550a an einer Vertiefung 391 vorbei bewegt, die einen Schrägverlauf 391 bezüglich der Kalibrierungsbahn 28 und auch der Orthogonalen 31 dazu hat. Allerdings ist dieser Schrägverlauf 391 entgegengesetzt geneigt zu einem Schrägverlauf der Kalibrierkonturabschnitte 552b und 552d, sodass diese jeweils nur mit einem Teilabschnitt der Vertiefung 391 während der Vorschubbewegung 29b entlang der Kalibrierungsbahn 28 in Eingriff gelangen.

An dieser Stelle sei bemerkt, dass die Vertiefung 290 bei diesem Ausführungsbeispiel nicht vorhanden sein kann. Aber auch wenn das der Fall wäre, sind die Schrägneigungen der Vertiefung 290 und der Kalibrierkonturabschnitte 552b und 552d bezüglich der Kalibrierungsbahn 28 unterschiedlich, sodass die Kalibrierkonturabschnitte 552b und 552d wiederum nur mit Teilabschnitten der Vertiefung 290 bei der Vorschubbewegung 29b entlang der Kalibrierungsbahn 28 in Eingriff gelangen.

## Patentansprüche

1. Kalibrierverfahren zum Kalibrieren einer Lageröffnung eines Werkstücks (70), insbesondere eines Motorbauteils (71), zum Beispiel eines Pleuels, mit einer Kalibriervorrichtung (10; 110), die mindestens ein Kalibrierwerkzeug (50; 150) aufweist, das an seinem Außenumfang mindestens eine Kalibrierkontur (52; 152) aufweist, mit der eine als Lagerfläche dienende Lager-Innenkontur (84) der Lageröffnung kalibrierbar ist, wobei bei dem Kalibrierverfahren die mindestens eine Kalibrierkontur (52; 152) durch eine Vorschubbewegung (29a, 29b) entlang einer Kalibrierungsbahn (28) zum Kalibrieren der Lageröffnung an der Lager-Innenkontur (84) entlang bewegt wird, **gekennzeichnet durch**:
Vorschieben der mindestens einen Kalibrierkontur (52; 152) an einer quer zu der Kalibrierungsbahn (28) verlaufenden nutartigen, an einer Lager-Innenkontur (84) der Lageröffnung angeordneten Vertiefung (90; 190; 290), insbesondere einer Ölnut, derart, dass die mindestens eine Kalibrierkontur (52; 152) im Verlauf der Vorschubbewegung mit unterschiedlichen Teilabschnitten der Vertiefung (90; 190; 290) in Eingriff gelangt.

2. Kalibrierverfahren nach Anspruch 1, **dadurch gekennzeichnet, dass** die mindestens eine Kalibrierkontur (52; 152) und die Vertiefung (90; 190; 290) an der Lager-Innenkontur (84) unterschiedliche Winkel bezüglich der Kalibrierungsbahn (28) aufweisen.

3. Kalibrierverfahren nach Anspruch 1 oder 2, **dadurch gekennzeichnet, dass** die mindestens eine Kalibrierkontur (52; 152) und/oder die Vertiefung (90; 190; 290) an der Lager-Innenkontur (84) einen Schrägverlauf bezüglich der Kalibrierungsbahn (28) aufweist.

4. Kalibrierverfahren nach einem der vorhergehenden Ansprüche, **gekennzeichnet durch** Abstützen des Kalibrierwerkzeugs des Kalibrierwerkzeugs (50a; 150a) beim Kalibrieren durch die mindestens eine Kalibrierkontur (52; 152) an der Lager-Innenkontur (84) in einer bezüglich der Kalibrierungsbahn (28) schräg verlaufenden Ebene (45, 46) durch mindestens eine bezüglich der Kalibrierungsbahn (28) vor oder hinter der mindestens einen, eine Haupt-Kalibrierkontur bildenden Kalibrierkontur (52; 152) angeordnete stützende Nebenkalibrierkontur (53, 54; 153, 154).

5. Kalibrierverfahren nach Anspruch 4, **gekennzeichnet durch** Vorschieben der mindestens einen Nebenkalibrierkontur (53, 54; 151,154) nur so weit, dass die Nebenkalibrierkontur in Kontakt mit der Vertiefung (90; 190; 290) der Lagerinnenkontur gelangt und die Haupt-Kalibrierkontur nicht Kontakt mit der Vertiefung (90; 190; 290) der Lagerinnenkontur gelangt.

6. Kalibrieranordnung umfassend ein Werkstück (70) und eine Kalibriervorrichtung zum Kalibrieren einer Lageröffnung des Werkstücks (70), insbesondere eines Motorbauteils (71), zum Beispiel eines Pleuels, wobei die Kalibriervorrichtung (10; 110) mindestens ein Kalibrierwerkzeug (50; 150) aufweist, das an seinem Außenumfang mindestens eine Kalibrierkontur (52; 152) aufweist, mit der eine als Lagerfläche dienende Lager-Innenkontur (84) der Lageröffnung kalibrierbar ist, wobei zum Kalibrieren der Lageröffnung die mindestens eine Kalibrierkontur (52; 152) durch eine Vorschubbewegung (29a, 29b) entlang einer Kalibrierungsbahn (28) an der Lager-Innenkontur (84) entlang bewegt wird, **dadurch gekennzeichnet, dass** die mindestens eine Kalibrierkontur (52; 152) und eine quer zu der Kalibrierungsbahn (28) verlaufende nutartige, an einer Lager-Innenkontur (84) der Lageröffnung angeordneten Vertiefung (90; 190; 290), insbesondere eine Ölnut, unterschiedliche Winkel bezüglich der Kalibrierungsbahn (28) aufweisen, wobei die Kalibrierkontur (52; 152) und/oder die Vertiefung (90; 190; 290) an der Lager-Innenkontur (84) einen Schrägverlauf bezüglich der Kalibrierungsbahn (28) aufweist, so dass bei einem Vorschieben der mindestens einen Kalibrierkontur (52; 152) die mindestens eine Kalibrierkontur (52; 152) im Verlauf der Vorschubbewegung mit unterschiedlichen Teilabschnitten der Vertiefung (90; 190; 290) in Eingriff gelangt.

7. Kalibrieranordnung nach Anspruch 6, **dadurch gekennzeichnet, dass** mindestens eines der Kalibrierwerkzeuge (50; 150) mindestens eine bezüglich der Kalibrierungsbahn (28) vor oder hinter der mindestens einen, eine Haupt-Kalibrierkontur bildenden Kalibrierkontur (52; 152) angeordnete stützende Nebenkalibrierkontur (53, 54; 153, 154) zum Abstützen des Kalibrierwerkzeugs (50a; 150a) beim Kalibrieren durch die mindestens eine Kalibrierkontur (52; 152) an der Lager-Innenkontur (84) in einer bezüglich der Kalibrierungsbahn (28) schräg verlaufenden Ebene (45, 46) aufweist.

8. Kalibrieranordnung nach Anspruch 6 oder 7, **dadurch gekennzeichnet, dass** die Hauptkalibrierkontur einen Schrägverlauf bezüglich der Kalibrierungsbahn (28) aufweist und/oder die Nebenkalibrierkontur (53, 54; 153, 154) orthogonal zur Kalibrierungsbahn (28) ist.

9. Kalibrieranordnung nach einem der Ansprüche 6 bis 8, **dadurch gekennzeichnet, dass** die mindestens eine Kalibrierkontur (52; 152) einen schraubenförmigen Verlauf mit zueinander parallelen Schrägkonturen oder Schrägkonturen mit unterschiedlichen Schrägneigungswinkeln bezüglich der Kalibrierungsbahn (28) aufweist.

10. Kalibrieranordnung nach einem der Ansprüche 6 bis 9, **dadurch gekennzeichnet, dass** die mindestens eine Kalibrierkontur (52; 152) einen keilförmigen Verlauf in Richtung der Kalibrierungsbahn (28) oder einen in Richtung der Kalibrierungsbahn (28) nach vorn oder hinten gerichteten, insbesondere ausgerundeten, Vorsprung aufweist.

## Claims

1. Calibration method for calibrating a bearing opening of a workpiece (70), in particular of a motor component (71), for example of a piston rod, with a calibration device (10; 110) that comprises at least one calibration tool (50; 150) which has on its outer circumference at least one calibration contour (52; 152) with which a bearing inner contour (84), serving as a bearing face, of the bearing opening can be calibrated, the at least one calibration contour (52; 152) being moved during the calibration method by a forward displacement movement (29a, 29b) along a calibration path (28) for calibrating the bearing opening on the bearing inner contour (84), **characterised by**:
forward displacement of the at least one calibration contour (52; 152) on a groove-like depression (90; 190; 290) extending transversely to the calibration path (28) and arranged on a bearing inner contour (84) of the bearing opening, in particular an oil groove, in such a way that the at least one calibration contour (52; 152) engages with different subsections of the depression (90; 190; 290) in the course of the forward displacement movement.

2. Calibration method according to Claim 1, **characterised in that** the at least one calibration contour (52; 152) and the depression (90; 190; 290) have, on the bearing inner contour (84), different angles with respect to the calibration path (28).

3. Calibration method according to Claim 1 or 2, **characterised in that** the at least one calibration contour (52; 152) and/or the depression (90; 190; 290) have, on the bearing inner contour (84) an oblique profile with respect to the calibration path (28).

4. Calibration method according to any one of the preceding claims, **characterised by** support of the calibration tool of the calibration tool *[sic]* (50a, 150a) during the calibration by the at least one calibration contour (52; 152) on the bearing inner contour (84) in a plane (45, 46) extending obliquely with respect to the calibration path (28) by at least one supporting secondary calibration contour (53, 54; 153, 154) arranged with respect to the calibration path (28) before or after the at least one calibration contour (52; 152) forming a main calibration contour.

5. Calibration method according to Claim 4, **characterised by** forward movement of the at least one secondary calibration contour (53, 54; 153, 154) only to such an extent that the secondary calibration contour comes in contact with the depression (90; 190; 290) of the bearing inner contour and the main calibration contour does not come in contact with the depression (90; 190; 290) of the bearing inner contour.

6. Calibration arrangement comprising a workpiece (70) and a calibration device for calibrating a bearing opening of the workpiece (70), in particular of a motor component (71), for example of a piston rod, with a calibration device (10; 110) that comprises at least one calibration tool (50; 150) which has on its outer circumference at least one calibration contour (52; 152) with which a bearing inner contour (84), serving as a bearing face, of the bearing opening can be calibrated, the at least one calibration contour (52; 152) being moved during the calibration method by a forward displacement movement (29a, 29b) along a calibration path (28) on the bearing inner contour (84) for calibrating the bearing opening, **characterised in that** the at least one calibration contour (52; 152) and a groove-like depression (90; 190; 290) extending transversely to the calibration path (28) and arranged on a bearing inner contour (84) of the bearing opening, in particular an oil groove, have different angles with respect to the calibration path (28), the at least one calibration contour (52; 152) and/or the depression (90; 190; 290) having, on the bearing inner contour (84) an oblique profile with respect to the calibration path (28), so that during a forward displacement of the at least one calibration contour (52; 152) the calibration contour (52; 152) engages with different subsections of the depression (90; 190; 290) in the course of the forward displacement movement.

7. Calibration arrangement according to Claim 6, **characterised in that** the at least one calibration tool (50; 150) comprises at least one supporting secondary calibration contour (53, 54; 153, 154) arranged with respect to the calibration path (28) before or after the at least one calibration contour (52; 152) forming a main calibration contour, for supporting the calibration tool (50a, 150a) during the calibration by the at least one calibration contour (52; 152) on the bearing inner contour (84) in a plane (45, 46) extending obliquely with respect to the calibration path (28).

8. Calibration arrangement according to Claim 6 or 7, **characterised in that** the main calibration contour has an oblique profile with respect to the calibration path (28), and/or the secondary calibration contour (53, 54; 153, 154) is orthogonal to the calibration path (28).

9. Calibration arrangement according to any one of Claims 6 to 8, **characterised in that** the at least one calibration contour (52; 152) has a screw-shaped profile with mutually parallel oblique contours or oblique contours with different oblique inclination angles with respect to the calibration path (28).

10. Calibration arrangement according to any one of Claims 6 to 9, **characterised in that** the at least one calibration contour (52; 152) has a wedge-shaped profile in the direction of the calibration path (28) or an in particular rounded projection directed forward or backward in the direction of the calibration path (28).

## Revendications

1. Procédé d'étalonnage servant à étalonner une ouverture de palier d'une pièce (70), en particulier d'une pièce de moteur (71), par exemple d'une bielle, avec un dispositif d'étalonnage (10 ; 110), qui présente au moins un outil d'étalonnage (50 ; 150), qui présente, au niveau de sa périphérie extérieure, au moins un contour d'étalonnage (52 ; 152), avec lequel un contour intérieur de palier (84), faisant office de surface de palier, de l'ouverture de palier peut être étalonné, dans lequel lors du procédé d'étalonnage l'au moins un contour d'étalonnage (52 ; 152) est déplacé par un déplacement d'avance (29a, 29b) le long d'une trajectoire d'étalonnage (28) pour l'étalonnage de l'ouverture de palier le long du contour intérieur de palier (84), **caractérisé par** :
l'avance de l'au moins un contour d'étalonnage (52 ; 152) au niveau d'un renfoncement (90 ; 190 ; 290) de type rainure s'étendant de manière transversale par rapport à la trajectoire d'étalonnage (28), disposé au niveau d'un contour intérieur de palier (84) de l'ouverture de palier, en particulier une rainure de graissage, de telle manière que l'au moins un contour d'étalonnage (52 ; 152) vient en prise, au cours du déplacement d'avance, avec différentes sections partielles du renfoncement (90 ; 190 ; 290).

2. Procédé d'étalonnage selon la revendication 1, **caractérisé en ce que** l'au moins un contour d'étalonnage (52 ; 152) et le renfoncement (90 ; 190 ; 290) présentent, au niveau du contour intérieur de palier (84), des angles différents par rapport à la trajectoire d'étalonnage (28).

3. Procédé d'étalonnage selon la revendication 1 ou 2, **caractérisé en ce que** l'au moins un contour d'étalonnage (52 ; 152) et/ou le renfoncement (90 ; 190 ; 290) présente, au niveau du contour intérieur de palier (84), un profilé oblique par rapport à la trajectoire d'étalonnage (28).

4. Procédé d'étalonnage selon l'une quelconque des revendications précédentes, **caractérisé par** le soutien de l'outil d'étalonnage (50a ; 150a) lors de l'étalonnage par l'au moins un contour d'étalonnage (52 ; 152) au niveau du contour intérieur de palier (84) dans un plan (45, 46) s'étendant de manière oblique par rapport à la trajectoire d'étalonnage (28) par au moins un contour d'étalonnage secondaire (53, 54 ; 153, 154) d'appui disposé devant ou derrière l'au moins un contour d'étalonnage (52 ; 152) formant un contour d'étalonnage principal par rapport à la trajectoire d'étalonnage (28).

5. Procédé d'étalonnage selon la revendication 4, **caractérisé par** l'avance de l'au moins un contour d'étalonnage secondaire (53, 54 ; 151, 154) jusqu'à ce que le contour d'étalonnage secondaire vienne en contact avec le renfoncement (90 ; 190 ; 290) du contour intérieur de palier et le contour d'étalonnage principal ne vienne pas en contact avec le renfoncement (90 ; 190 ; 290) du contour intérieur de palier.

6. Ensemble d'étalonnage comprenant une pièce (70) et un dispositif d'étalonnage servant à étalonner une ouverture de palier de la pièce (70), en particulier d'une pièce de moteur (71), par exemple d'une bielle, dans lequel le dispositif d'étalonnage (10 ; 110) présente au moins un outil d'étalonnage (50 ; 150), qui présente, au niveau de sa périphérie extérieure, au moins un contour d'étalonnage (52 ; 152), avec lequel un contour intérieur de palier (84), faisant office de surface de palier, de l'ouverture de palier peut être étalonné, dans lequel pour étalonner l'ouverture de palier, l'au moins un contour d'étalonnage (52 ; 152) est déplacé par un déplacement d'avance (29a, 29b) le long d'une trajectoire d'étalonnage (28) le long du contour intérieur de palier (84), **caractérisé en ce que** l'au moins un contour d'étalonnage (52 ; 152) et un renfoncement (90 ; 190 ; 290) de type rainure s'étendant de manière transversale par rapport à la trajectoire d'étalonnage (28), disposé au niveau d'un contour intérieur de palier (84) de l'ouverture de palier, en particulier une rainure de graissage, présentent des angles différents par rapport à la trajectoire d'étalonnage (28), dans lequel le contour d'étalonnage (52 ; 152) et/ou le renfoncement (90 ; 190 ; 290) présente, au niveau du contour intérieur de palier (84), un profilé oblique par rapport à la trajectoire d'étalonnage (28) de sorte que lors d'une avance de l'au moins un contour d'étalonnage (52 ; 152), l'au moins un contour d'étalonnage (52 ; 152) vient en prise au cours du déplacement d'avance, avec différentes sections partielles du renfoncement (90 ; 190 ; 290).

7. Ensemble d'étalonnage selon la revendication 6, **caractérisé en ce qu'**au moins un des outils d'étalonnage (50 ; 150) présente au moins un contour d'étalonnage secondaire (53, 54 ; 153, 154) d'appui disposé devant ou derrière l'au moins un contour d'étalonnage (52 ; 152) formant un contour d'étalonnage principal par rapport à la trajectoire d'étalonnage (28), pour soutenir l'outil d'étalonnage (50a ; 150a) lors de l'étalonnage par l'au moins un contour d'étalonnage (52 ; 152) au niveau du contour intérieur de palier (84) dans un plan (45, 46) s'étendant de manière oblique par rapport à la trajectoire d'étalonnage (28).

8. Ensemble d'étalonnage selon la revendication 6 ou 7, **caractérisé en ce que** le contour d'étalonnage principal présente un profilé oblique par rapport à la trajectoire d'étalonnage (28), et/ou le contour d'étalonnage secondaire (53, 54 ; 153, 154) est orthogonal par rapport à la trajectoire d'étalonnage (28).

9. Ensemble d'étalonnage selon l'une quelconque des revendications 6 à 8, **caractérisé en ce que** l'au moins un contour d'étalonnage (52 ; 152) présente un profilé de forme hélicoïdale avec des contours obliques parallèles les uns aux autres ou des contours obliques avec des angles d'inclinaison oblique différents par rapport à la trajectoire d'étalonnage (28).

10. Ensemble d'étalonnage selon l'une quelconque des revendications 6 à 9, **caractérisé en ce que** l'au moins un contour d'étalonnage (52 ; 152) présente un profilé en forme de coin en direction de la trajectoire d'étalonnage (28) ou une saillie, en particulier arrondie, dirigée vers l'avant ou l'arrière en direction de la trajectoire d'étalonnage (28).
